# EUROPEAN PATENT SPECIFICATION

(11) **EP 0 831 618 B1**
(45) Date of publication and mention of the grant of the patent: **14.11.2012**
(21) Application number: 97116368.8
(22) Date of filing: 19.09.1997
(51) Int. Cl.: G06K 7/00

(54) **Improvements in or relating to information/data transfer systems**
Verbesserung von Information- oder Datenübertragungssystemen
Perfectionnements apportés aux systèmes de transfert d'information / de données

(30) Priority: 19.09.1996 US 26190 P
(43) Date of publication of application: 25.03.1998
(73) Proprietor: TEXAS INSTRUMENTS DEUTSCHLAND GMBH, 85356 Freising (DE)
(72) Inventor: Aslanidis, Konstantin, 85221 Dachau (DE); Berthon, Alain, 06800 Cagnes sur Mer (FR)
(74) Representative: Holt, Michael

(56) References cited:
- EP-A- 0 200 447
- EP-A- 0 300 200
- EP-A- 0 696 011
- US-A- 5 365 551

## Description

### FIELD OF THE INVENTION

This invention relates in general to information/data transfer systems, and more particularly, to the inventorying of a multiplicity of transponders within a given read range or the identification of remote stations on a LAN or WAN network. The term "transponder" and "station" will be used in the same meaning in the description below.

### BACKGROUND OF THE INVENTION

In the realm of RF-ID many problems exist but present themselves as merely trade-offs of technology. For example, the read range of an interrogator may have a certain limit, but the limit is based on technological distinctions such as size of the read antenna or orientation of the transponder with respect to the interrogator, or perhaps FCC regulations. However, reading a multiplicity of transponders within any given read range presents itself in a much different light. Reading a multiplicity of transponders presents itself in applications such as inventory control, asset management or hands-free access control. Inherently, the problem arises when several transponders within the read range of an interrogator respond simultaneously on a unique communication channel to a global (broadcast) interrogation signal. What results from this simultaneous transmission is an unintelligible signal at the interrogator's receiver. In other words, none of the transponders is identified, and the whole purpose of the RF-ID system is defeated.

Previously, solutions to the collisions have ranged from addressing a particular transponder to time delaying each transponders response a unique amount of time according to each transponder. Of course, both of the mentioned previous solutions add additional time to read all the transponders within the read range because of having to individually address each transponder or because of having to wait for the sum total of all transponder wait times plus responses, making the entire RF-ID system less efficient. In addition, even when individually addressing transponders, the issue is that the address of each individual transponder is initially unknown, since the transponders present within the reader range are just a sample of a much larger population (several millions or even hundred of millions). It is a bit like attempting to call each member of a group of persons by its name before even knowing this name. A similar situation exists on a computer network (LAN or WAN) when the address of all stations (computers) are unknown.

Mechanisms for solving these problems exist, for instance, such as Collision Detection, followed by random retry. However, while these mechanisms can easily be implemented on sophisticated computers, they are much too complex to be implemented on low-cost devices such as transponders. Moreover, the fact that the transponders are battery-less (or at least power consumption conscious) implies that it is difficult or even impossible to keep a record of previous transactions. Thus, it should be the responsibility of the reader to handle the entire responsibility of inventorying.

Considering a population of several hundred millions, scanning the whole range of addresses is unpractical because it would take a prohibitive length of time. A more practical approach has been proposed in a previously filed application, US Patent serial number 08/588,657 filed on January 19, 1996, and assigned to Texas Instruments Incorporated, where only a part of the transponder address, the sub_address, is scanned (the Less Significant 4 Bits on a 32 bits address for instance). In the case of this example, there are 16 different positions (2 power 4): if only two transponders are located within the field, the probability that any two transponders have the same sub-address is 1/16 or 6.25%. This probability will increase in proportion with the number of transponders. One way to reduce this probability is to increase the size of the sub-address, for instance to 8 bits instead of 4 bits. However, doing so increases the reading time without even being 100% sure of avoiding all collisions (i.e. reading all of the transponders located within the read range).

If N is the size of the sub_address and T is the number of transponders in the field, the inventorying time is: 2 &circ& N * reader_request_time + T * transponder_response__time. Assuming 20 transponders exist within the read range, a reader request time of 50ms, a transponder request time of 30ms and a sub-address on 8 bits, the inventorying time is:
2 &circ& 8 * 50ms + 20 * 30ms = 12,800ms + 600ms = 13,400ms or 13.4 seconds
.... and the probability that a collision will result (i.e. not being able to inventory two or more transponders) is 52.4%. The required time of 13.4 seconds is deemed unacceptable by the market. Thus the need has arisen for a system capable to address efficiently this market requirement, both in terms of timing and cost of implementation (meaning that most of the intelligence must be in the reader system).

United States patent No 5365551 describes a communication system employing a common communication medium used by one or more interrogating commander stations and a plurality of responding responder stations. A responder station responds after receiving an error-free message that includes means for the responder station to determine that it has been addressed. When not addressed, the responder station does not respond. A responder station can be addressed individually by including its unique identification number in the message or as a member of a group by including a group designation in the message. Uninterrupted communication between a commander station and a responder station can be conducted in one of two ways. First, when the message transmitted from a commander station includes a group designation to which only one responder station is a member, only one responder station responds. Second, when the message transmitted from a commander station includes the unique identification of one responder station, only one responder station responds.

### SUMMARY OF THE INVENTION

Accordingly, the present invention provides a method for identifying a plurality of remote units according to claim 1.

The above-mentioned problems are solved in this invention in that the interrogator (reader) addresses a set of transponders, each transponder in this set having a common addressing scheme, and the addressed transponders responds only upon the matching of their own address with the received addressing scheme. The transponders address is some sub-set of the transponders identification code. The addressing scheme comprises a fixed size sub_address and a variable size mask. For example, assuming that the transponder address is 32 bits, the implementation of the addressing scheme can choose 4 bits for the size of the sub-address and 0, 4, 8, 12, 16, 20, 24, 28 bits for the size of the mask. Initially the interrogator transmits a null mask and a variable address ranging from 0 to (2 <sub-address size> -1). Upon receipt of collision, the interrogator stores the collision addresses. Then one collision address at a time, the interrogator transmits a new series of interrogation commands using the previous collision address as the new mask and then cycling through the sub-addresses as previously done (from 0 to (2 <sub-address size> -1)). Then once that particular collision address has been cycled through, another collision address is used as the mask for the next series of interrogation commands, repeating the above-described procedure until all collision addresses have been used as masks for a new series of interrogation commands. The collision masks and addresses from each series of interrogation commands are then again saved and used as the mask for the next series of interrogation commands and so on and so forth. By varying the addressing scheme by varying the mesk, the reader will in time interrogate all the transponders individually, thus receiving their unique address and achieving the requested exhaustive inventory

### BRIEF DESCRIPTION OF THE DRAWINGS

The present invention will now be further described by way of example, with reference to the accompanying drawings in which:
Figures 1, 2 and 3 show examples of masks and sub-addresses which either result in a match with the transponder or not;
Figure 4. shows the reader algorithm according to a preferred embodiment of the invention programmed in software.
Figure 5 shows an implementation of the reader algorithm according to a preferred embodiment of the invention as a tree diagram; and
Figures 6 and 7 show the raw data and a graphed curve of the data which shows the number of Selective Poll Commands required to inventory a number of transponders.

### DETAILED DESCRIPTION OF THE PREFERRED EMBODIMENTS

In order to better define the invention, certain assumptions will be made with respect to the make-up of the transponder and reader and the transmission protocol of the interrogator. The first assumption is that each transponder is uniquely identified by a unique Identification (ID) code, also called its address. The number of address bits will depend upon the total population of transponders within the read range of the interrogator. For example, a 32 bit address will provide up to 2.2 billion unique addresses and therefore identify up to 2.2 billion transponders. The second assumption is that the reader has the ability to detect that more than one transponder has responded, thus generating a collision. The collision detection mechanism is implementation specific. The third assumption is that the reader has the ability to send commands and parameters to the transponders and that the transponders have the ability to process them. These assumptions are intended to aid in the explanation of the invention and are not intended to limit the scope of the invention.

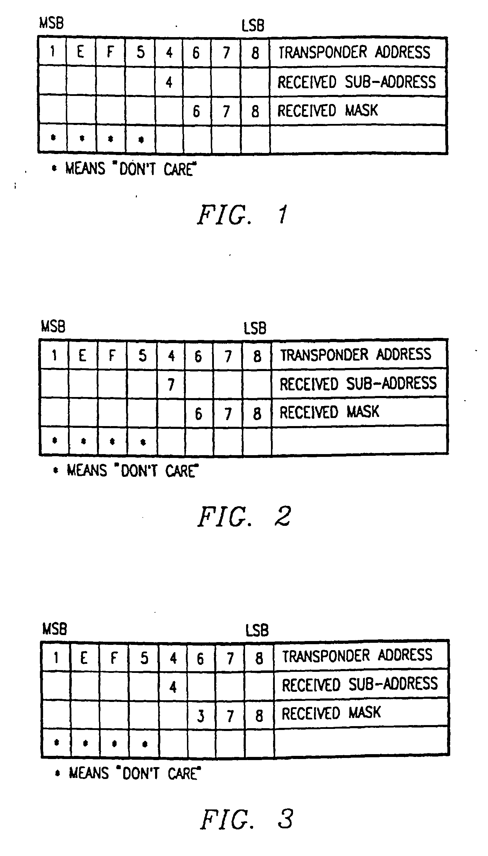

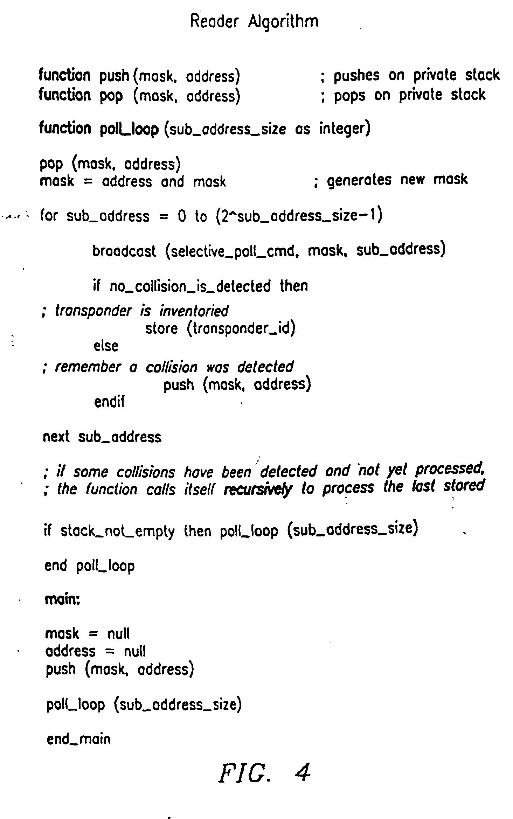

One of the elements of the preferred embodiment of the invention is the "Selective Poll Command" sent by the reader to all transponders/stations. This command has two parameters, the mask and the sub-address. Upon receipt of a "Selective Poll Command"(SPC), each transponder responds only if the concatenation of received sub-address value and mask value matches the least significant bits of its address or if the SPC is "satisfying the addressing scheme conditions". Figures 1, 2, and 3 provide examples on how a transponder responds to such a command, according to various addressing schemes, i.e. various values of the sub-address and of the mask. Starting with the LSB is purely convention. One could as well start with the MSB, or even in an arbitrary but well known order. For example, according to an embodiment that is not part of the invention but background art that is useful for understanding the invention, instead of the command sending a mask and a sub-address, the command would send an address and also a command instructing the transponders as yet unidentified to use as a sub-address a different set of bits within their identification code (i.e. instead of using the 4 least significant bits, using bits 27-30 or bits 9-12 to compare the sub-address to). More critical to the embodiment of the invention is that the mask is built, step by step from the sub-addresses having caused collisions, as explained below in the reader algorithm shown in Figure 4.

If more than one transponder satisfies the addressing scheme conditions as specified by the Selective Poll command sent by the reader, collisions will result and the interrogator will fail to receive any intelligible identification codes from the myriad of transponders, but will detect that a collision has occurred (assumption 2).

A second element of the preferred embodiment of the invention is the algorithm used by the reader to inventory the transponders, using the Selective Poll Command, as shown in Figure 4. A poll cycle is defined as the sending of a succession of Selective Poll Commands and sub-commands by the reader, with a fixed mask value and a sub-address value varying from 0 to its maximum value (2 <sub-address size> -1), i.e. for a sub-address size of 4, the maximum sub-address is 15. The structure and actual implementation of the "Selective_Poll Command" will vary from one system to another, in order to stay compatible with the existing command structure. For example, the implementation may take one of these two structures. The first example of a Selective Poll Command is a sequence of (2 <sub-address size>) sub-commands, each sub-command comprised of the same mask value and a sub-address value varying from 0 to its maximum value (2 <sub-address size> -1). This type of implementation is independent of the physical layer used for the command transmission and is likely to be chosen for an implementation on a LAN/WAN. A second example of the Selective Poll Command that is not part of the invention but background art that is useful for understanding the invention, is a unique command within which the mask value is a variable parameter, and is then followed by (2 <sub-address size> -1) power pulses, each pulse incrementing the sub-address checked by each transponder, such incrementing the sub-address as described in a previously filed application, US Patent serial number 08/588,657 filed on January 19, 1996, and assigned to Texas Instruments Incorporated. This type of implementation performs especially well since the command code and the mask value needs to be sent only once per poll cycle. This implementation is likely to be used for an implementation on transponders.

The reader algorithm description is as follows. During the first poll cycle, the reader sends all transponders a Selective Poll Command, with, as parameters, a null mask (mask length is zero), and a variable sub-address (sub-address size remains constant), which will vary from 0 to (2 <sub-address size> -1) during this cycle, as described above. During each poll cycle (the first one and any subsequent), if an intelligible response is received from a transponder, the reader stores the received address. The transponder is then uniquely identified. If an unintelligible response (collision) is received instead, the reader stores in its memory the combination of mask and sub-address which has caused this collision. Thus, at the end of each poll cycle, the reader has a list of where and how many collisions have taken place and the corresponding addressing schemes, each made of the mask and the sub_address having caused the collision.

During the next read cycle, the reader retrieves from its memory one of the such stored combination of mask and sub-addresses and sends to all transponders a Selective Poll Command, with, as parameters, a mask equal to the concatenation of the just retrieved sub-address and the mask, and a new sub-address (starting from a value of zero). The following sub-commands will then consist of the same concatenated mask and the variable sub-address from the initial value of 0 (mentioned above) to (2 ^{sub-address size} - 1). Then the next such stored collision combination of mask and address forms the new mask for another series of Selective Poll Commands and sub-commands and so on and so forth until all previous collision addresses have become new masks for the next series of Selective Poll Commands and sub-commands. Further, if during these subsequent poll cycles collisions occur, the reader stores in its memory the combinations of mask and sub-address which have been the cause of the collisions, as described above. Then the collision sub-address and mask concatenated form the new mask for the next read cycle and the cycle repeats itself until no collisions are detected.

The reader performs such read poll cycles until all the stored combinations (mask, sub-address) have been processed. At this stage all transponders have been inventoried. The order in which the subsequent poll cycles are executed is not important. For example, it is possible to detect all collisions for a given mask and then process them, or process each collision as soon as it occurs, and then detect further collisions for a given mask. The choice of one principle or the other will depend upon the Selective Poll Command implementation and will be generally driven by performance considerations.

The structure and actual implementation of the "Selective_Poll Command" will vary from one system to another, in order to stay compatible with the existing system's architecture. As an example, the structure of the "Selective Poll Command" could be as follows, assuming a Transponder Id on 32 bits and a Sub-Address Size of 4 bits.

| Parameter | Size | Value |
|---|---|---|
| Command Code specific | 4 bits | implementation |
| Mask Size | 8 bits | 0-28 |
| Mask Value defined | 0-28 bits | variable,reader |
| Sub-Address Size | 4 bits | 4 |
| Sub-Address Value | 4 bits | 0-15 |

The Sub-Address Size can be a system parameter, and thus may not been required in the command parameters. The Sub-Address Value will be varied by the reader from zero to its maximum value of (2 ^{sub-address size} - 1) as described above.

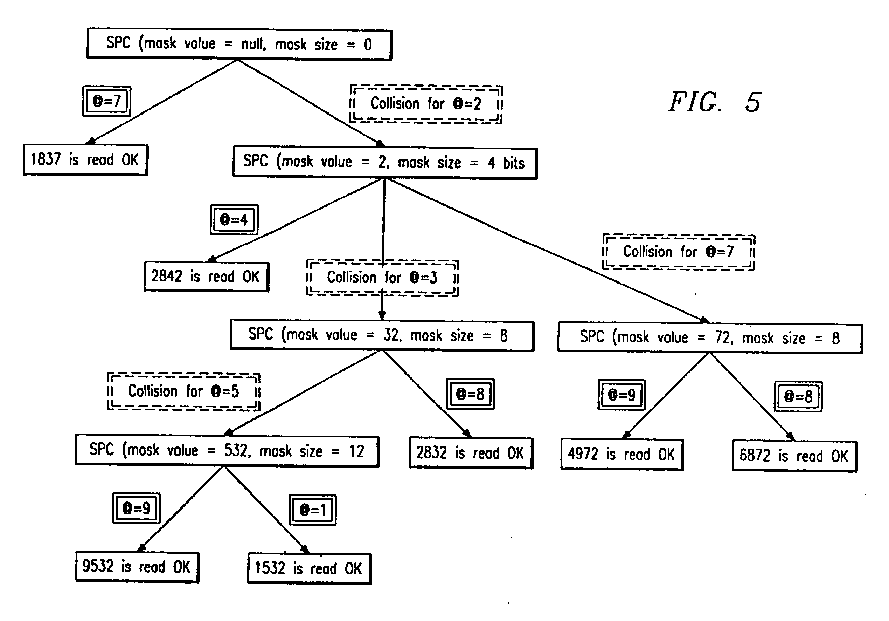

An example of the algorithm according to the invention in practice is shown in Figure 5. In Figure 5, the tree addressing scheme according to the preferred embodiment of the invention is shown. A sub-address length of 4 bits and a mask length of 0 bits is initially shown. The interrogator transmits a mask of null value, and a variable value sub-address, such that the first transmission consists of a mask of 0 and a sub-address of 0. Then the second transmission would be a mask of 0 and a sub-address of 1 etc., ever increasing the sub-addresses until a full interrogation cycle is complete. If collisions are detected along the way, then those sub-addresses where the collisions were detected are stored. After the full interrogation cycle is complete (i.e. all the sub-addresses have been transmitted) then the interrogator starts a new interrogation cycle with a mask size of 4 bits(to accommodate all the collision sub-addresses), and uses as the mask value, the collision sub-address. Therefore, as shown in Figure 5 if when the sub-address of 2 was transmitted, a collision was detected, then the next interrogation cycle would start with a mask of 2, and then cycle through the sub-addresses, 0 through (2 ^{power sub-address size} -1). If during this second interrogation cycle a collision was then detected at mask value 2, sub-address value 3, and at mask value 2, sub-address value 7, then two more branches of the tree would abound and a third interrogation cycle would start with a mask of 23 and the fourth interrogation cycle would start with a mask of 27 and then as previously described, the interrogations would transmit the new masks and cycle through the sub-address of 0 to (2 ^{sub-address size} - 1) performing one branch at a time. And the process continues with the collision mask and sub-address concatenated forming the new mask for the next set of Selective Poll Commands and sub-commands until all the transponders in the field are identified.

In another preferred embodiment according to the invention, an interesting possibility provides an extension of the invention. It might be possible that although two or more transponders responds to a Selective Poll Command, and thus that a collision should be detected by the reader, this collision is not actually detected. This may occur, for instance, when one of the transponder has a RF signal much stronger than the others, for instance because it is closer to the reader antenna or because its own antenna is able to generate a stronger field than other transponder antennas. Failing to detect this collision means that the transponders who have answered will not be inventoried. An easy solution to this problem is to implement a Quiet Command, which is effected via a transponder address. In other words, a transponder receiving a Quiet Command with an address equal to its own ID/address will enter into a Quiet mode and will not respond to any subsequent Selective Poll Command, until the Quiet mode is exited by some means such as reception of another command type or a reset (power-off or something else). Upon completion of the first inventory cycle (i.e. all detected collisions have been detected), the reader sends a Quiet Command to every inventoried transponder, and starts a new inventory cycle. This process can be repeated until no transponder is inventoried during an inventory cycle.

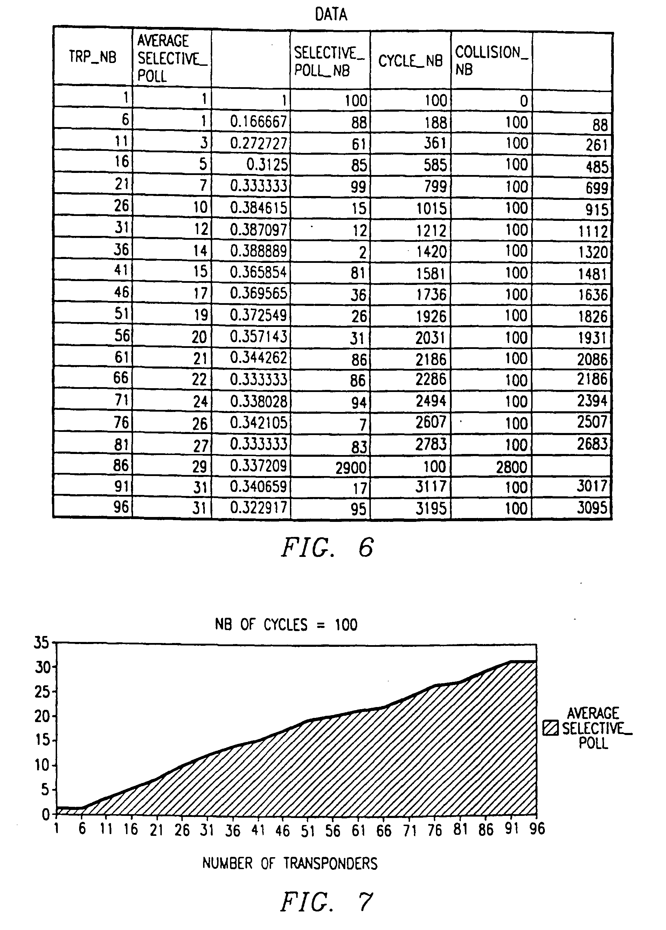

The simulation results shown in Figures 6-7 were obtained with a software simulator written in Microsoft ® Visual Basic. Figure 6 shows one workbook page in developed in Excel ® and Figure 7 provides a graphical representation of this data. The valuable information that this simulation provides is that the average number of Selective Poll Commands that are required to inventory a number of transponders between 2 and 300 is always less than 0.4 per transponder using the algorithm according to the preferred embodiment of the invention. The total time required is thus less than :
0.4 * T * Selective_Poll_Command_time + T *
transponder_response_time
ensuring identification of all the transponders, where T is the number of transponders in the field, Selective_Poll_Command_time is the time duration of a Selective Poll Command and
transponder_response_time is the time duration of a transponder response. If we assume the same values as in the calculation above, the average time to inventory 20 transponders is :
   0.4 * 20 * 50ms + 20 * 30 ms = 400ms + 600ms = 1s versus the more than 13s required by prior art systems as described previously when describing prior art methods of addressing a multiplicity of transponders.

## Claims

1. A method for identifying a plurality of remote units, each having a unique address, the method comprising the steps of:
transmitting a first series of successive first sub-addresses to the plurality of remote units, wherein the remote units are adapted to respond if the unique address of the remote unit matches one of the first sub-addresses transmitted to the remote units; **characterized by** the further steps of 1 listening for responses from the remote units and storing the transmitted first sub-address as a collision address if an unintelligible response is received;
transmitting a second series of successive second addresses comprising a concatenation of a mask and the successive series of first sub-addresses, wherein the mask comprises the previously stored collision address;
listening for responses from the remote units and upon receipt of unintelligible responses, storing the respective second address as a second collision address;
wherein said steps of listening for responses, receiving unintelligible responses and storing collision address are repeated until all stored collision addresses have been used as masks.

2. The method according to claim 1, wherein a remote unit is an RF-ID transponder of an RF-ID system.

3. The method according to claim 1, wherein a remote unit is a remote station of a network,

4. The method of any of claims 1 to 3, wherein said step of transmitting said first and second series of said first and second addresses comprises transmitting a successive series of addresses comprising addresses from 0 to 2 ^{sub-address} - 1.

5. The method of any of claims 1 to 4, further comprising transmitting a fixed size sub-address and a variable size mask.

6. The method of any of claims 1 to 5, further comprising increasing said mask size with each transmission of said second series of successive second addresses.

7. The method of any preceding claim, further comprising identifying T remote units with the time defined by
0.4 * T * Selective_Poll_Command_time + T * remote unit_response_time
wherein remote unit_response_time is the amount of time it takes for a remote unit to respond and Selective_Poll_Command_time is the duration of said second series of successive second addresses.

8. The method of any of claims 5 to 7, wherein during said step of transmitting said first series of successive first sub-addresses, the mask size is null.

9. The method of claim 6, further comprising increasing said mask size as a result of receiving unintelligible responses and storing the successive series of first sub-addresses as collision addresses, wherein the concatenation of the mask and the successive series of first sub-addresses becomes the mask for the next second series of successive second addresses.

10. The method of any preceding claim, further comprising generating the sub-addresses from at least one bit of a remote unit identification code.

11. The method of claim 1, wherein upon being identified, said remote unit receiving a quiet command along with an address equal to its own address for disabling the remote unit until further notice.

## Patentansprüche

1. Ein Verfahren, um eine Vielzahl von Fernbedienungsteilen zu identifizieren, jede mit einer Einzeladresse, das Verfahren besteht aus den folgenden Schritten:
die Übertragung einer ersten Serie von sukzessiven ersten Subadressen zur Vielzahl von Fernbedienungsteilen, wobei die Fernbedienungsteilen abgestimmen werden, um zu reagieren, wenn die Einzeladresse eines Fernbedienungsteils einer der esten Subadressen entspricht, die zu den Fernbedienungsteilen übergetragt werden; **gekennzeichnet durch** die weiteren Scritte von
der Abhörung von Ansprechen von den Fernbedienungsteilen und dem Speichern der übergetragenen ersten Subadressen als eine Kollisionsadresse, wenn ein unverständliches Ansprechen bekommen ist;
Der Übertragung einer zweiten Serie von sukzessiven zweiten Adressen bestehend aus einer Rahmenverknüpfung einer Maske und der sukzessiven Serie von ersten Subadressen, wobei die Maske aus der früher gespeicherten Kollisionsadresse besteht;
Der Abhörung von Ansprechen von den Fernbedienungsteilen und wenn unverständlichen Ansprechen bekommen sind, wird die jeweilige zweite Adresse als eine zweite Kollisionsadresse gespeichert;
wobei die Schritte von der Abhörung von Ansprechen, dem Empfang von unverständlichen Ansprechen und dem Speichern von Kollisionsadressen wiedergeholt werden, bis alle gespeicherten Kollisionsadressen als Maske benutzt worden werden.

2. Das Verfahren nach Anspruch 1, wobei ein Fernbedienungsteil einen RFID-Transponder eines RFID-Systems ist.

3. Das Verfahren nach Anspruch 1, wobei ein Fernbedienungsteil eine entfernte Station eines Netzwerkes ist.

4. Das Verfahren nach Ansprüchen 1 - 3, wobei der o.g Schritt von der Übertragung der ersten und zweiten Serie der o.g. ersten und zweiten Adressen aus der Übertragung einer sukzessiven Serie von Adressen besteht, diese Adressen umfassen Adressen von 0 bis 2 ^{sub-address} - 1.

5. Das Verfahren nach Ansprüchen 1 - 4, weiter bestehend aus der Übertragung einer Subadresse mit festen Größe und einer Maske mit regelbaren Größe.

6. Das Verfahren nach Ansprüchen 1 - 5, weiter bestehend aus der Zustimmung der Maskegröße mit jeder Übertragung der o.g. zweiten Serie von sukzessiven zweiten Adressen.

7. Das Verfahren nach allen vorhergehenden Ansprüchen, dazu bestehend aus der Bestimmung von T Fernbedienungsteilen mit der Zeit, die als
0.4 * T * Selective_Poll_Command_time + T * remote unit_response_time
definiert wird, wobei remote unit_response_time der Betrag von Zeit ist, die ein Fernbedienungsteil braucht, um zu reagieren und Selective_Poll_Command_time ist der Dauer der o.g zweiten Serie von sukzessiven zweiten Adressen.

8. Das Verfahren nach Ansprüchen 5 - 7, wobei die Maskegröße Null ist, während der o.g. Schritt von der Übertragung der ersten Serie von sukzessiven ersten Subadressen, ist die Maskegröße Null.

9. Das Verfahren nach Anspruch 6, dazu bestehend aus der Zustimmung der o.g. Maskegröße als Folge des Empfangs von unverständlichen Ansprechen und des Speicherns der sukzessiven Serie von ersten Subadressen als Kollisionsadresse, wobei die Rahmenverknüpfung der Maske und die sukzessive Serie von ersten Subadressen die Maske für die nächste zweite Serie von sukzessiven zweiten Adressen wird.

10. Das Verfahren nach allen vorhergehenden Ansprüchen, dazu bestehend aus der Erzeugung der Subadressen von mindestens einem Bit des Fernbedienungsteilbestimmungskodes.

11. Das Verfahren nach Anspruch 1, wobei wenn es identifiziert wird, bekommt der o.g. Fernbedienungsteil eine Ruheanweisung sowohl als auch eine Adresse, welche Adresse seine eigene Adresse gleicht, damit den Fernbedienungsteil bis auf weiteres deaktiviert wird.

## Revendications

1. Une méthode pour identifier une pluralité d'unités distantes, chacune ayant une adresse unique, la méthode comprenant les étapes de
transmettre une première série de premières adresses secondaires successives à la pluralité d'unités distantes, où les unités distantes sont adaptées pour répondre si l'adresse unique de l'unité distante correspond à une des premières adresses secondaires transmise aux unités distantes ; **caractérisé par** les autres étapes de
écouter les réponses des unités distantes et mémoriser la première adresse secondaire transmise comme une adresse de collision si une réponse incompréhensible est reçue ;
transmettre une seconde série de deuxièmes adresses successives comprenant un masque de concaténation et la série successive de premières adresses secondaires, où le masque comprend une adresse de collision mémorisée auparavant ;
écouter les réponses des unités distantes et en recevant une réponse incompréhensible, mémoriser la deuxième adresse respective comme une deuxième adresse de collision ;
où lesdites étapes d'écouter les réponses, recevoir les réponses incompréhensibles et mémoriser les adresses de collision sont répétées jusqu'à toutes les adresses de collision mémorisées ont été utilisées comme masques.

2. La méthode selon la revendication 1, où une unité distante est un transpondeur RFID d'un système RFID.

3. La méthode selon la revendication 1, où une unité distante est un poste à distance d'un réseau.

4. La méthode selon les revendications 1 - 3, où ladite étape de transmettre lesdites premières et deuxièmes séries desdites premières et deuxièmes adresses comprend la transmission d'une série successive d'adresses comprenant les adresses de 0 - 2 ^{sub-address} - 1.

5. La méthode selon les revendications 1-4, comprenant en outre la transmission d'une adresse secondaire avec une dimension fixée et un masque avec une dimension variable.

6. La méthode selon les revendications 1 - 5, comprenant en outre l'augmentation de ladite dimension du masque avec chaque transmission de la deuxième série de deuxièmes adresses successives.

7. La méthode selon toutes revendications précédentes comprend en outre l'identification T des unités distantes avec le temps défini par
0.4 * T * Selective_Poll_Command_time + T * remote unit_response_time
Où remote unit_response_time représente la durée qu'il met pour une unité distante à répondre et Selective_Poll_Command_time est la durée de ladite deuxième série de deuxièmes adresses successives.

8. La méthode selon les revendications 5 - 7, où la dimension du masque est zéro pendant ladite étape de transmettre ladite première série d'adresses secondaires successives.

9. La méthode selon la revendication 6, comprend en outre l'augmentation de ladite dimension du masque comme résultat de recevoir les réponses incompréhensibles et mémoriser la série successive de premières adresses secondaires comme les adresses de collision, où la concaténation du masque et la série successive de premières adresses secondaires devient le masque pour la prochaine deuxième série de deuxièmes adresses successives.

10. La méthode selon toute revendication précédente, comprend en outre la production des adresses secondaires d'au moins un bit d'un code d'identification d'une unité distante.

11. La méthode selon la revendication 1, où après été identifiée, ladite unité distante reçoit une commande tranquille ainsi qu'une adresse qui est égale à sa propre adresse pour désactiver l'unité distante jusqu'à nouvel ordre.
